# FASCICULE DE BREVET EUROPEEN

(11) **EP 0 689 403 B1**
(45) Date de publication et mention de la délivrance du brevet: **05.03.1997**
(21) Numéro de dépôt: 93905345.0
(22) Date de dépôt: 17.03.1993
(51) Int. Cl.: A61C 7/00

(54) **DISPOSITIF D'ORTHODONTIE**
ORTHODONTISCHE VORRICHTUNG
ORTHODONTIC DEVICE

(43) Date de publication de la demande: 03.01.1996
(73) Titulaire: DE BAETS, Jan, CH-1205 Genève (CH)
(72) Inventeur: DE BAETS, Jan, CH-1205 Genève (CH)
(74) Mandataire: Blomme, Johan Henri Maria
(86) Numéro de dépôt international: EP9300631
(87) Numéro de publication internationale: WO9318718

(56) Documents cités:
- US-A- 2 580 042

## Description

La présente invention est du domaine de l'orthodontie et concerne un dispositif destiné à redresser les dents.

On connaît de nombreux appareils destinés à déplacer les dents, surtout les dents de jeunes enfants, qu'il s'agisse de dispositifs fixés en bouche ou de systèmes à porter temporairement au cours de la journée ou de la nuit.

On a constaté que lorsque l'on doit dégager les molaires vers l'arrière, afin de créer de la place pour les autres dents ou assurer un meilleur positionnement par rapport à la mâchoire opposée, il faut non seulement les translater, mais également les déplacer angulairement afin qu'elles soient amenées dans une position optimale.

Un dispositif assurant à la fois une rotation et une translation d'une molaire est connu de la publication US-A-2 580 042 et est indiqué dans le préambule de la revendication 1.

La correction du dispositif connu n'est pas prédéterminée et l'orthodontiste doit donc contrôler les positions de la molaire à des intervals de courte durée.

La présente invention permet à la fois la correction angulaire dans une position prédéterminée et le mouvement de translation sans friction et en fonction de la résistance propre et individuelle du système maxillodentaire, alors que l'orientation de la force appliquée n'est pas modifiée.

Le dispositif selon l'invention est caractérisé comme indiqué dans la revendication 1.

En outre, une pièce en coin peut être prévue pour ajuster pour chaque cas particulier le déplacement angulaire de la dent.

Selon les formes d'exécution, le dispositif est soit directement fixé sur la dent, soit il est monté sur une bague entourant celle-ci, qui est fixe ou fait partie d'un dispositif amovible.

Le dessin annexé représente, à titre d'exemples non limitatifs, des formes d'exécution de l'objet de la présente invention.

La figure 1 est un croquis du positionnement relatif des dents d'une demi-mâchoire, dont la première molaire doit être déplacée au moyen du dispositif selon l'invention, représenté de manière schématique dans cette figure.

Les figures 2A et 2B représentent des phases successives du déplacement de la première molaire de la figure 1.

La figure 3 est une vue en perspective d'une première forme d'exécution de l'objet de la présente invention, dans une variante de fixation sur une bague entourant la dent.

La figure 4 est une vue de dessus de l'ensemble de la figure 3, avec coupe partielle.

La figure 5 est une vue en perspective d'une seconde forme d'exécution, dans une variante de fixation directe du dispositif selon l'invention sur la dent.

La figure 6 est une vue en coupe longitudinale de l'ensemble de la figure 5.

La figure 7 est une vue de dessus d'une variante d'exécution de fixation directe sur la dent.

La figure 8 est une vue en perspective, avec arraché partiel, d'une quatrième forme d'exécution à support fixé à la dent.

Les figures 9a et 9b représentent, vues en coupe, les positions extrêmes d'une cinquième forme d'exécution.

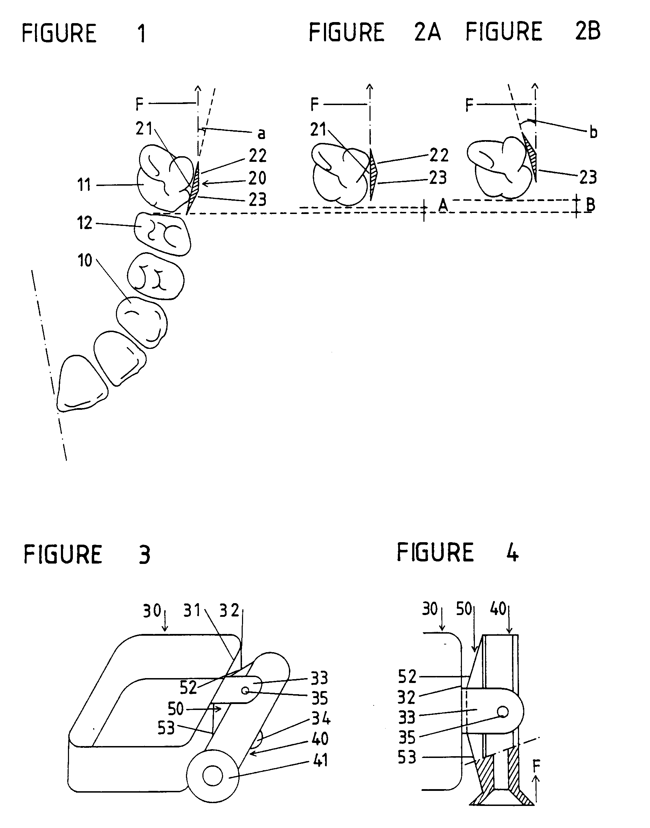

Dans l'implantation schématique des dents 10 donnée à la figure 1, on notera que la première molaire 11 est représentée au contact de la prémolaire 12 dont on cherche à l'éloigner. La molaire 11 est directement solidaire d'une pièce triangulaire 20 comportant trois faces planes 21, 22 et 23.

Comme on le verra par la suite, le déplacement de la molaire représentée aux figures 1 et 2 se fait en appliquant une force dans la direction de la flèche F représentée au dessin. Ce déplacement est engendré soit de manière intra-orale (par des moyens installés entre les dents adjacentes tels que ressorts, élastiques, aimants, glissières, rails, plaques), soit de manière extra-orale (par exemple au moyen d'un arc facial coopérant indirectement avec la dent et comportant des ailes qui s'étendent à l'extérieur de la bouche du patient et qui sont reliées élastiquement derrière sa nuque). De tels appareils étant connus de l'homme du métier, ils ne sont pas représentés au dessin.

On notera dans la représentation de la figure 1 que la force F est sensiblement parallèle à la face plane 22 tandis que la face plane 21 de la pièce triangulaire est celle fixée à la molaire 11.

Les représentations schématiques des figures 2A et 2B montrent respectivement des positions relatives de la molaire 11 qui est déplacée angulairement : d'abord la direction de la force F est parallèle à la face plane 21, puis à la face plane 23. Le déplacement angulaire de la molaire 11 est donc donné par l'angle c qui est la somme de l'angle a représenté à la figure 1 et de l'angle b représenté à la figure 2B. Quant à la translation de la dent vers le haut selon la flèche F, il est représenté, dans la phase intermédiaire de la figure 2A, par l'écartement A et dans la phase de la figure 2B par la distance B. Grâce à l'invention, le déplacement angulaire pourra être limité à une valeur pré-déterminée.

Dans l'exposé qui précède, on a décrit l'invention en rendant la dent solidaire d'une pièce triangulaire 20 destinée à être poussée dans le sens de la flèche F par des moyens de déplacement non représentés, qui autorisent le pivotement de cette pièce triangulaire. Comme on le verra par la suite, il est possible d'obtenir le même mouvement relatif de la dent elle-même par rapport à une pièce triangulaire portée par les moyens de déplacement. On notera en outre que le praticien n'est pas limité par la forme spécifique de la pièce triangulaire 20 car il peut accoler celle-ci à un coin de manière à limiter le déplacement angulaire à la valeur optimale dans chaque cas spécifique.

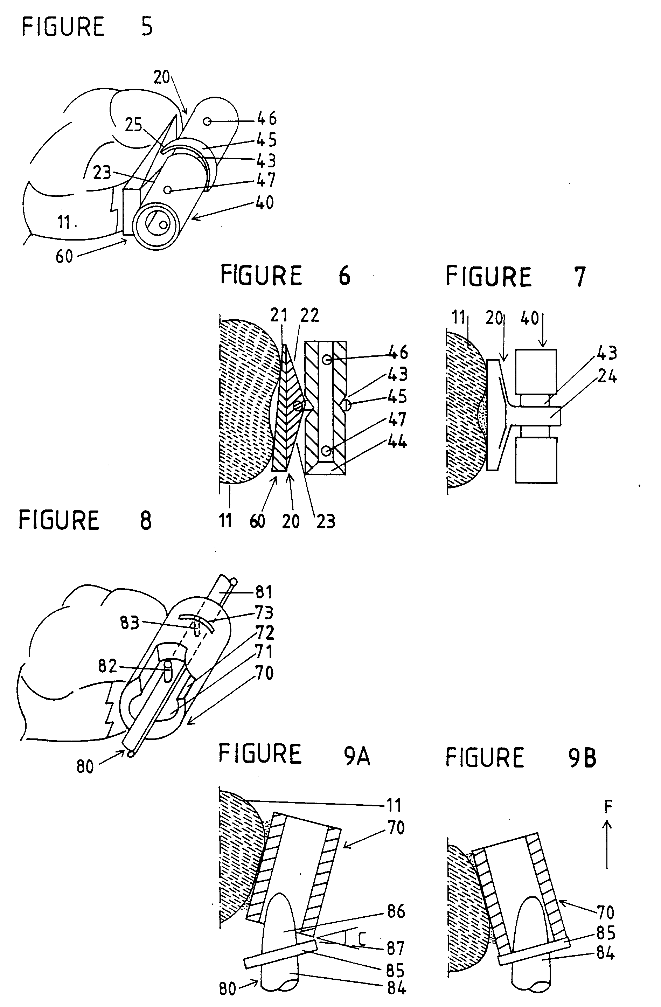

Dans la variante des figures 3 et 4, on a représenté une bague 30 destinée à être sertie autour de la dent à déplacer. Les bords 31 de la face extérieure 32 de la bague comportent deux ailes 33 et 34 repliées vers l'extérieur et destinées à recevoir un corps tubulaire 40 monté pivotant sur l'axe 35. Pour faciliter l'introduction de l'organe de poussée dans le sens de la flèche F, le corps tubulaire 40 est muni vers l'avant d'une collerette évasée 41. Dans cette première forme d'exécution, le corps tubulaire 40 comporte un prolongement latéral 50 en direction de la bague 30.

Ce prolongement 50 remplace la pièce triangulaire précédemment mentionnée et comporte donc deux faces planes 52 et 53. Dans la position de départ, correspondant au schéma de la figure 1, c'est la face plane 52 qui vient appuyer contre la face extérieure 32 de la bague. Grâce au pivotement autour de l'axe 35, la dent peut se déplacer angulairement au cours de sa translation (passant par exemple dans la position de la figure 4), et finalement c'est la face 53 du prolongement 50 qui vient s'appuyer contre la face extérieure 32 de la bague 30.

Dans la variante des figures 5 et 6, on a représenté une seconde forme d'exécution plus proche de celle schématisée aux figures 1 et 2, car on retrouve une pièce triangulaire 20, qui peut être soit directement fixée à la dent, soit par l'intermédiaire d'une pièce en coin 60 destinée à adapter le déplacement angulaire de la molaire 11 à chaque cas spécifique. On a représenté au dessin une pièce triangulaire 20 et un coin 60 distincts, mais il est bien sûr possible de réaliser une pièce unique.

La pièce triangulaire 20 comporte une ouverture 25 destinée à la liaison pivotante au corps cylindrique 40. Dans la variante représentée, le corps cylindrique 40 comporte un dégagement périphérique 43 destiné au passage d'un anneau 45 de fixation dans l'ouverture 25. Pour faciliter l'introduction de l'organe de poussée dans le sens de la flèche F, le corps tubulaire 40 présente une entrée troncônique 44. On a également représenté, aux extrémités du corps tubulaire 40, deux trous 46 et 47 destinés à la liaison à des éléments non représentés au dessin de liaison aux dents adjacentes. Dans la position de départ, correspondant au schéma de la figure 1, la face 22 vient appuyer contre le corps tubulaire 40. En raison du pivotement de l'anneau 45 dans l'ouverture 25, c'est la face 23 qui appuie contre le corps tubulaire lorsque la dent 11 a été déplacée angulairement de la valeur prédéterminée.

Dans la variante de la figure 7, la pièce triangulaire 20 est fixée à la dent, directement ou non. Elle comporte à la pointe du triangle un anneau fixe 24 entourant le dégagement périphérique 43 du corps tubulaire 40, pour assurer son pivotement. On notera que dans cette variante, de même que dans celle des figures 5 et 6, un degré de liberté supplémentaire s'ajoute au balancement décrit en regard des figures 3 et 4.

La forme d'exécution de la figure 8 propose un corps tubulaire 70, représenté directement fixé à la dent, qui comporte intérieurement un passage 71 de section oblongue, destiné au passage d'un tube 81 indirectement solidaire des moyens d'application 80 de la force de déplacement. Le corps tubulaire 70 comporte, dans cette variante, des paires d'ouvertures arquées 72 et 73. Le tube 81 est traversée par deux goupilles 82 et 83 destinées à assurer son pivotement à l'intérieur du passage 71 de section oblongue. Les goupilles 82 et 83 font saillie dans les ouvertures arquées 72 et 73 dont les extrémités constituent les butées limitant le déplacement angulaire.

Les formes d'exécution des figures 3 à 8 sont toutes représentées dans la position intermédiaire correspondant au schéma de la figure 2A. La dernière variante qui sera décrite en regard des figures 9A et 9B est par contre représentée dans les deux positions extrêmes du déplacement angulaire. On y retrouve un corps tubulaire 70 fixé à la dent, soit directement, soit par l'intermédiaire d'une bague, fixe ou amovible. Les moyens d'application 80 de la force de déplacement selon la flèche F sont constitués ici par une tige 84 munie d'une collerette inclinée 85 et terminée par une partie troncônique 86.

Lorsque le dispositif est appliqué et que l'ensemble est dans la position schématique de la figure 1, représentée à la figure 9A, seul le point 87 de la collerette vient appuyer contre le bord du corps tubulaire 70. Lorsque la dent a été déplacée d'un angle c, toute la collerette inclinée 85 vient buter sur la face avant du corps tubulaire 70. On voit bien dans cette représentation que, lorsque la position de la figure 9B est atteinte, la dent sera uniquement déplacée vers le haut dans le sens de la flèche F et qu'elle ne pourra pas pivoter davantage. En variante, on pourrait prévoir une pointe cylindrique en deçà de la collerette destinée à coopérer avec un dégagement troncônique.

De nombreuses formes d'exécution pourraient encore être envisagées, combinant les différents systèmes décrits jusqu'ici et les utilisant également dans des applications à base de ressorts, d'aimants ou autres.

## Revendications

1. Dispositif de déplacement d'une dent (11) comportant un support (20, 30, 70) fixé à la dent et des moyens d'application d'une force aptes à coopérer au moins indirectement avec le support et comportant en outre une pièce (40, 80) au moins indirectement solidaire des moyens d'application de la force de déplacement, cette pièce étant apte à pivoter par rapport au dit support, **caractérisé en ce que** la pièce pivotante (40, 80) et/ou le support (20, 30, 70) comportent des moyens de butée (22, 23; 52, 53; 71, 82, 83; 85, 86) destinés à coopérer avec l'autre, de manière à limiter le déplacement angulaire de la dent à une valeur prédéterminée, correspondant à la correction dans une position prédéterminée.

2. Dispositif selon la revendication 1, **caractérisé en ce que** les dits moyens de butée comportent un plan incliné (22, 23; 52, 53; 85).

3. Dispositif selon la revendication 1 ou 2, **caractérisé par** une pièce en coin (60) disposée entre la dent et le support, de manière à ajuster le déplacement angulaire de la dent.

4. Dispositif selon la revendication 1 ou 2, **caractérisé par** une pièce triangulaire (20) fixée à la dent (11) et comportant des moyens de fixation de la pièce pivotante (40).

5. Dispositif selon la revendication 1 ou 2, **caractérisé par** une bague (30) fixée à la dent (11) et comportant des moyens de fixation de la pièce pivotante (40).

6. Dispositif selon la revendication 5, **caractérisé en ce que** la pièce (50) comportant les plans inclinés (52, 53) est disposée à l'extérieur de la pièce pivotante (40).

7. Dispositif selon la revendication 5, **caractérisé en ce que** la pièce comportant les plans inclinés est disposée à l'intérieur de la pièce pivotante (40).

8. Dispositif selon la revendication 1, **caractérisé par** une pièce (80) munie de moyens de guidage (82, 83) aptes à coopérer avec une présentant des dégagements (72, 73) pratiqués dans le support (70) de manière à limiter le déplacement angulaire.

9. Dispositif selon la revendication 1 ou 2, **caractérisé par** le fait que la pièce (80) solidaires des moyens d'application de la force (F) comporte une partie oblique par rapport à l'axe de la force (F), apte à coopérer avec ledit support (70).

## Claims

1. Device for moving a tooth (11) comprising a holder (20,30,70) attached to the tooth and a force exerting means suited to cooperate at least indirectly with the holder and characterised moreover by the fact that it comprises an element (40, 80) which is at least indirectly liable with the force exerting means, the element being suited to pivote in respect to said holder and characterised by the fact that the pivoting element (40,80) and/or the support (20,30,70) comprise means of stops (22,23; 52,53; 71,82,83; 85,86) destined to co-operate with the first in the aim to limit the movement of angulation of the tooth to a predetermined value.

2. Device as in claim 1, characterised by the fact that the said stops comprise a plane sloping side (22,23; 52,53;85).

3. Device as in claim 1 or 2, characterised by cuneal member (60) disposed between the tooth and the holder in the manner to adjust the angular movement of the tooth.

4. Device as in claim 1 or 2, characterised by a triangular element (20) fixed on the tooth (11) and comprising fixation means of the pivoting element (40).

5. Device as in claim 1 or 2, characterised by a holder (30) fixed on the tooth (11) and comprising fixation means of the pivoting piece (40).

6. Device as in claim 5, characterised by the fact that the element (50) comprising the plane sloping sides (52,53) is arranged at the exterior side of the pivoting element (40).

7. Device as in claim 5, characterised by the fact that the piece comprising the plane sloping sides is arranged at the interior side of the pivoting element.

8. Device as in claim 1, characterised by an element (80) equipped with means of guidance (82,83) suited to co-operate with a spectre of redemptions (72,73) carried out in the element (70) in the manner to limit the angular movement.

9. Device as in claim 1 or 2, characterised by the fact that the element (80) jointly liable with the force application (F) comprises an oblique part in respect to the force (F) and is suited to cooperate with said element (70).

## Patentansprüche

1. Apparat aus einem am Zahn (11) befestigten Träger (20,30,70) und aus einer Vorrichtung, geeignet zur Kraftübertragung, welche zumindest indirekt mit dem Träger zusammenwirkt. Diese Vorrichtung enthält darüberhinaus ein Teil, das zumindest indirekt mit dem kraftübertragenden Element (40,80) verbunden ist. Dieses Element kann sich um eine Achse in Hinblick auf den obenerwähnten Träger drehen. Der Apparat ist gekennzeichnet dadurch, dass sich das um eine Achse drehende Element (40,80) und/oder der Träger (20,30,70) Anschläge aufweisen (22,23;52,53;71,82,83;85,86), die entweder einzeln oder zusammen, die Drehverschiebung des Zahnes auf einen im voraus festgelegten Wert begrenzen, der mit einer Korrektur in eine vorgegebene Stellung übereinstimmt.

2. Apparat wie in Forderung 1, dadurch gekennzeichnet, dass die obenerwähnten Anschläge eine geneigte Fläche (22,23;52,53;85) aufweisen.

3. Apparat wie in Forderung 1 oder 2, gekennzeichnet durch ein keilförmiges Element (60) zwischen dem Zahn und dem Träger, welches die Drehverschiebung des Zahnes einstellen lässt.

4. Apparat wie in Forderung 1 oder 2, gekennzeichnet durch ein dreieckiges Teil (20), welches am Zahn (11) befestigt ist, und Verbindungsteile mit dem sich um eine Achse drehenden Element (40) besitzt.

5. Apparat wie in Forderung 1 oder 2, gekennzeichnet durch einen Ring (30), der am Zahn (11) befestigt ist, und Verbindungsteile des sich um eine Achse drehenden Teiles (40) enthält.

6. Apparat wie in Forderung 5, dadurch gekennzeichnet, dass das Teil (50) welches die abgeschrägten Flächen (52,53) enthält, sich an der Aussenseite des sich um eine Achse drehenden Elements (40) befindet.

7. Apparat wie in Forderung 5, dadurch gekennzeichnet, dass das Teil(50), welches die abgeschrägten Flächen enthält, sich an der Innenseite des sich um eine Achse drehenden Elements (40) befindet.

8. Apparat wie in Forderung 1, gekennzeichnet durch ein Teil (80), das über Führungsmöglichkeiten (82,83) verfügt und durch geeignete Begrenzungen (72,73) in der Vorrichtung (70), um die Drehverschiebung einzuschränken.

9. Apparat wie in Forderung 1 oder 2, dadurch gekennzeichnet, dass das Teil (80) welches mit dem kraftausübenden Element (F) verbunden ist, ein gegenüber der Kraftachse geneigtes Teilstück (F) besitzt, welches mit der erwähnten Vorrichtung (70) zusammenwirkt.
